# EUROPEAN PATENT APPLICATION

(11) **EP 2 977 951 A1**
(43) Date of publication of application: **27.01.2016**
(21) Application number: 15178323.0
(22) Date of filing: 24.07.2015
(51) Int. Cl.: G06Q 50/26, G06Q 10/10, H04W 4/22, H04W 4/02

(54) **OPERATING METHOD AND DEVICE FOR DISASTER INFORMATION**

(30) Priority: 24.07.2014 KR 20140094177
(71) Applicant: Samsung Electronics Co., Ltd, Gyeonggi-do 443-742 (KR)
(72) Inventor: Woo Hyuk, Jang, 445-787 Hwaseong-si (KR); Park, Jae Hyun, 463-869 Seongnam-si (KR); Park, Hey Young, 143-724 Seoul (KR); Bae, Jong Kyu, 402-837 Incheon (KR); Yoon, Yeo Rok, 437-740 Uiwang-si (KR); Lee, Ki Won, 446-750 Yongsin-si (KR); Lee, Je Hyun, 137-830 Seoul (KR); Lim, Ki Young, 446-882 Yongin-si (KR); Choi, Jong Yeol, 471-744 Guri-si (KR)
(74) Representative: Nederlandsch Octrooibureau

(57) **Abstract**

Disclosed is an electronic device including a memory storing collected location information of the electronic device, and a processor configured to convert the collected location information into code information which represents a specific area of the earth. The electronic device transmits the code information to a disaster information providing device for which location information management is required in association with the provision of disaster information.. Further disclosed is a disaster information providing system including the providing device and a plurality of mobile electronic devices. Disaster-related information is provided to those devices determined to be located within a damage zone, as determined by location information obtained by the respective devices and provided to the disaster information providing device.

## Description

### CLAIM OF PRIORITY

This application claims the benefit of a Korean patent application filed o n July 24, 2014 in the Korean Intellectual Property Office and assigned Serial number 1 0-2014-0094177.

### TECHNICAL FIELD

The present disclosure relates to generally to operation of a disaster infor mation system.

### BACKGROUND

Natural and man-made disasters may occur over a wide area or intensel y within a localized area. Various types of man-made disasters include conflagrations, collapse, explosion, traffic accidents, chemical or biological accidents, environmental p ollution accidents, etc. Natural disasters include hurricanes, floods, torrential rain, stron g wind, storm, hail, heavy snow, lightning, drought, earthquake, yellow dust, red tide, a nd so forth. Disasters cause property damage and sometimes loss of lives. In general, damage and death due to disasters is most serious at the moment of occurrence, but loss es may be limited through good handling of disaster situations. Therefore, one of the k ey ways to respond to a disaster is to guide people affected by the disaster at the mome nt of its occurrence.

Typically, when a disaster occurs, information on a disaster area is briefl y provided at a national level or at a specific agency level. Therefore, even if certain pe rsons are present in the disaster area, they may not become immediately aware of a curr ent disaster situation or a relation between the location of the disaster and their own loc ations.

### SUMMARY

Accordingly, an aspect of the present disclosure is to provide a disaster i nformation system operating method for providing disaster-related information through an electronic device so that a disaster situation is quickly and accurately recognized, an d an electronic device and a disaster information providing device for supporting the m ethod.

Another aspect of the present disclosure is to provide a disaster informat ion system operating method for providing appropriate disaster-related information wit hout raising sensitive issues (e.g., a legal issue about personal privacy) related to treatm ent of location information of an electronic device, and an electronic device and a disast er information providing device for supporting the method.

Another aspect of the present disclosure is to provide a disaster informat ion system operating method for accurately and quickly calculating an area for which di saster-related information is to be provided, and an electronic device and a disaster info rmation providing device for supporting the method.

Another aspect of the present disclosure is to provide a disaster informat ion system operating method for accurately and quickly calculating electronic devices p ositioned within an area for which disaster-related information is required according to a disaster type and disaster characteristics, and an electronic device and a disaster infor mation providing device for supporting the method.

Another aspect of the present disclosure is to provide a disaster informat ion system operating method for providing disaster-related information according to a d isaster information type or grade (e.g., a grade based on immediacy or urgency), and an electronic device and a disaster information providing device for supporting the metho d.

In accordance with an embodiment of the present disclosure, an electronic device includes a memory storing collected location information of the electronic device, and a processor coupled to the memory which is configured to convert the collected location information into code information representing a specific area. The processor transmits the code information to a disaster information providing device for which location information management is required in association with the provision of disaster information. The code information may be in the form of Geohash codes or the like.

In accordance with another embodiment of the present disclosure, a disa ster information providing device includes a server storage module configured to store code information related to a location of an electronic device, and a server communicati on module configured to receive disaster information including at least one of a disaster occurrence place, a disaster type, or a disaster scale. The storage module stores a plural ity of code information corresponding to locations of respective electronic devices. A s erver control module coupled to the server storage module is configured to calculate at least one damage zone on a basis of at least one of the disaster occurrence place, the dis aster type, or the disaster scale, and to transmit disaster-related information to a subset of the electronic devices that each have a location matched to the damage zone, as deter mined by the code information. The code information may be in the form of Geohash c odes or the like.

In accordance with another embodiment, a disaster information providin g system includes a disaster information providing device and a plurality of mobile elec tronic devices. Each electronic device is capable of determining a current location there of as being associated with a specific cell of the earth, with the specific cell being defin ed by digits of a code such as a Geohash code. Each electronic device provides the code of its current location to the disaster information providing device via a network. The d isaster information providing device calculates a damage zone on the basis of at least o ne of a disaster occurrence place, a disaster type, or a disaster scale. The providing devi ce determines cells of the earth identifiable by respective codes as being at least partly within the damage zone, and transmits disaster-related information to a subset of the ele ctronic devices that each have a location matched to the damage zone, as determined by the codes transmitted to the disaster information providing device.

### BRIEF DESCRIPTION OF THE DRAWINGS

FIG. 1 schematically illustrates an electronic device operation environm ent related to operation of a disaster information system according to various embodim ents of the present disclosure.
FIG. 2 illustrates an example of a location management module accordin g to various embodiments of the present disclosure.
FIG. 3 illustrates an example of a disaster information providing device according to various embodiments of the present disclosure.
FIG. 4A illustrates an example of a server control module according to v arious embodiments of the present disclosure.
FIG. 4B illustrates an example of collected converted location informati on according to various embodiments of the present disclosure.
FIG. 5 illustrates an example of a disaster-related information notificatio n zone for each grade according to various embodiments of the present disclosure.
FIG. 6A exemplarily illustrates calculation of a disaster-related informati on notification zone according to various embodiments of the present disclosure.
FIG. 6B exemplarily illustrates screen interface of electronic device related to a disaster-related information notificatio n zone according to various embodiments of the present disclosure.
FIG. 7 illustrates an electronic device operating method related to locati on information provision according to various embodiments of the present disclosure.
FIG. 8 illustrates a method for operating a disaster information providin g device according to various embodiments of the present disclosure.
FIG. 9 illustrates a signal flow related to collection of converted location information according to various embodiments of the present disclosure.

### DETAILED DESCRIPTION

Hereinafter, various embodiments of the present disclosure will be descr ibed with reference to the accompanying drawings. The present disclosure may be vari ously modified and may include various embodiments. However, specific embodiment s are exemplarily illustrated in the drawings and detailed descriptions related thereto ar e provided. However, it should be understood that various embodiments of the present disclosure are not limited to specific examples but rather include all modifications, equi valents and alternatives that fall within the scope of various embodiments of the present disclosure. Regarding the drawings, like reference numerals refer to like elements.

The term "include," "comprise," "including," or "comprising" used here in indicates disclosed functions, operations, or existence of elements but does not exclu de other functions, operations or elements. It should be further understood that the ter m "include", "including", "comprise", "comprising", "have", or "having" used herein s pecifies the presence of stated features, numbers, operations, elements, components, or combinations thereof but does not preclude the presence or addition of one or more oth er features, numbers, operations, elements, components, or combinations thereof.

The meaning of the term "or" or "at least one of A and/or B" used herein includes any and all combinations of words listed together with the term. For example, the wording "A or B" or "at least one of A and/or B" may indicate A, B, or both A and B.

The terms such as "first", "second", and the like used herein may refer t o various elements of various embodiments of the present disclosure, but do not limit th e elements. For example, such terms do not limit the order and/or priority of the eleme nts. Furthermore, such terms may be used to distinguish one element from another ele ment. For example, a first user device and a second user device indicate different user devices. For example, without departing the scope of the present disclosure, a first ele ment may be named as a second element, and similarly, a second element may be name d as a first element.

It will be understood that when an element is referred to as being "conne cted" or "coupled" to another element, it can be directly connected or coupled to the oth er element or intervening elements may be present. In contrast, when an element is refe rred to as being "directly connected" or "directly coupled" to another element, it should be understood that there are no intervening elements.

The terminology used herein is not for delimiting the present disclosure but for describing specific various embodiments of the present disclosure. The terms of a singular form may include plural forms unless otherwise specified.

The terms used herein, including technical or scientific terms, have the s ame meanings as understood by those skilled in the art unless otherwise defined herein. The commonly used terms such as those defined in a dictionary should be interpreted i n the same context as in the related art and should not be interpreted in an idealized or o verly formal detect unless otherwise defined explicitly.

An input function of an electronic device according to various embodim ents of the present disclosure will be described with reference to the accompanying dra wings.

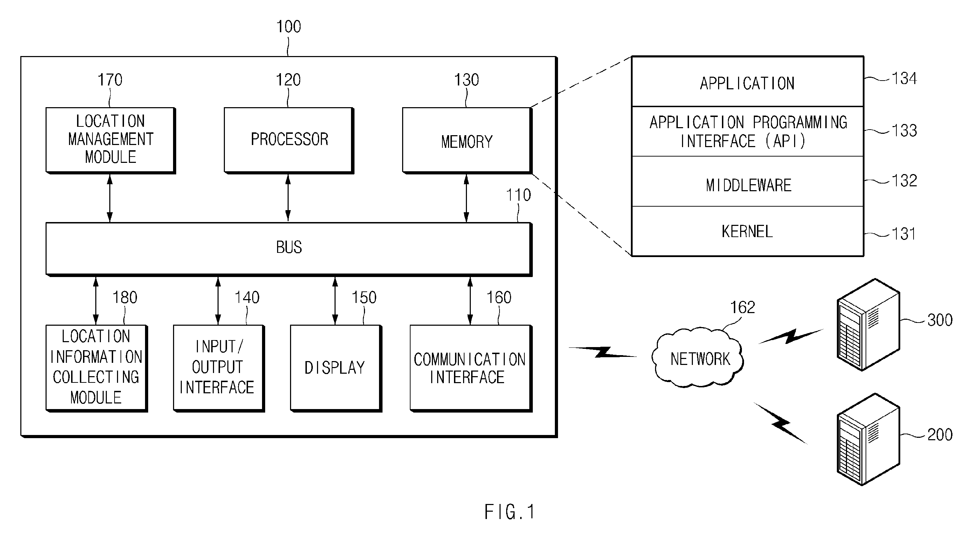

FIG. 1 schematically illustrates an electronic device operation environm ent related to operation of a disaster information system according to various embodim ents of the present disclosure. The electronic device operation environment may includ e an electronic device 100, a network 162, a disaster information collecting device 300 ("collecting device 300"), and a disaster information providing device (DIPD) 200. In a typical embodiment, electronic device 100 is a portable and wireless communication d evice such as a smartphone, tablet computer, laptop computer, smart camera, etc. capab le of determining its location using a GPS receiver or the like. Although one device 100 is shown in FIG. 1, in a typical environment, many devices 100 operated by respective users are in communication with the network 162 and DIPD 200.

Collecting device 300 may collect disaster information which is ultimate ly provided to the electronic device 100. For example, collecting device 300 may provi de disaster occurrence area information and disaster type information to DIPD 200 in re al time or periodically at a certain period. Collecting device 300 may collect informatio n over network 162 using a sensor or network of sensors or the like disposed at one or more areas to detect a disaster therefrom, or a report from a disaster occurrence area. C ollecting device 300 may provide the disaster occurrence area information as latitude a nd longitude information. Alternatively, collecting device 300 may provide the disaster occurrence area information as a location ID. The location ID may be identifier inform ation pre-assigned to a certain regional unit. The location ID may include various types of identifiers, e.g., identifiers uniquely assigned for each administrative district unit or geographic feature unit. The location ID may be mapped to latitude and longitude.

DIPD 200 may receive the disaster information from collecting device 3 00. DIPD 200 may receive location information from respective electronic devices 100 . The location information may include, for example, latitude and longitude informatio n or hash code information (e.g., Geohash information). Geohash information divides t he earth into certain zones using 12-digit numbers (12 bits) for each of latitude and long itude. A coverage range may be changed according to the number of digits of the Geo hash information, by using the most significant bits of the 12-bit numbers. For exampl e, the size of an area indicated by four digits of the Geohash information may be larger than that of an area indicated by five digits of the Geohash information. Thus the Geoh ash information usable in various embodiments of the present disclosure may be at least a part of 12 digits. The Geohash information is one example of information for defini ng geographic areas in various embodiments discussed herein. However, in other embo diments the Geohash information or the hash code information may be replaced with ot her code information for distinguishing a specific area of the earth using certain number s or characters.

DIPD 200 may check the disaster type and location information provide d by collecting device 300, and may calculate boundaries of a disaster-related informat ion notification zone according to a disaster type on the basis of a disaster occurrence lo cation. DIPD 200 may also check the location information provided by the electronic d evices 100 to filter the electronic devices 100 located in the disaster-related information notification zone. DIPD 200 may provide disaster-related information to the filtered el ectronic devices 100. To this end, DIPD 200 may determine a zone for which the disast er-related information is to be preferentially provided over other zones according to the type of the disaster information. DIPD 200 may vary the disaster-related information p rovided to the electronic devices 100 located in each zone. For instance, devices 100 wi thin an emergency zone might be provided with guide information for dealing with the disaster, whereas devices 100 in non-emergency zones might be provided with more ge neral information pertaining to the disaster.

If the location information from a device 100 is in the form of latitude / l ongitude, DIPD 200 may convert the location information provided by the electronic de vice 100 into specific hash code information (e.g., Geohash information). DIPD 200 m ay also provide the Geohash information obtained through such conversion to the electr onic device 100. If DIPD 200 registers the Geohash information converted or otherwis e obtained from the electronic device 100, DIPD 200 may store and manage the Geohas h information. DIPD 200 may map a disaster occurrence area to a Geohash zone to det ermine an accurate area for which the disaster-related information is to be provided.

The disaster-related information provided by DIPD 200 may be the same as or different from the disaster information collected by DICD 300. For example, DI PD 200 may add emergency grade information or guide information (e.g., a method for escaping a disaster) to the disaster information provided by DICD 300 so as to generate the disaster-related information to devices 100 in an emergency zone.

The network 162 may support establishment of a communication channe l between collecting device 300 and DIPD 200 and a communication channel between DIPD 200 and the electronic devices 100. The network 162 may include, for example, network device elements related to establishment of a mobile communication channel a nd network device elements related to establishment of an Internet communication chan nel. As such, network 162 may include cell phone base stations, a cell phone switching center(s), and the Internet. Network 162 may transfer the disaster information collected by collecting device 300 to DIPD 200. The network 162 may transfer the location info rmation of the electronic devices 100 to DIPD 200. The network 162 may transfer the disaster-related information provided by DIPD 200 to the electronic devices 100.

As shown in FIG. 1, the electronic device 100 may include a bus 110, a processor 120, a memory 130, an input/output interface 140, a display 150, a communic ation interface 160, a location management module 170, and a location information coll ecting module 180.

The bus 110 may be a circuit for connecting the above-mentioned eleme nts to each other and transferring communications (e.g., control messages, input events, data, or the like) between the above-mentioned elements. For example, the bus 110 ma y transfer an input signal input through the input/output interface 140 to at least one of t he processor 120 or the location management module 170. The bus 110 may transfer, f or example, location information collected by the location information collecting modul e 180 to the location management module 170 or the communication interface 160. Th e bus 110 may transfer the disaster-related information received through the communic ation interface 160 to at least one of the display 150 or the input/output interface 140.

The processor 120 may control overall operations of device 100, and ha ndle transmission/reception of instructions of other elements (e.g., the memory 130, the input/output interface 140, the display 150, the communication interface 160, the locati on management module 170, or the location information collecting module 180) throug h the bus 110. The processor 120 may interpret received instructions, and may perform operations or process data according to the interpreted instructions. The processor 120 may include the location management module 170 or may be separate from the locatio n management module 170. The processor 120 may communicate with the location ma nagement module 170 directly or via the bus 110. The processor 120 may process a sig nal related to provision of the location information or a signal related to output of the di saster-related information independently or according to operation of the location mana gement module 170.

The memory 130 may store an instruction or data received from or gener ated by the processor 120 or another element (e.g., the input/output interface 140, the di splay 150, the communication interface 160, or the location management module 170). The memory 130 may include programming modules such as a kernel 131, a middlewa re 132, an application programming interface (API) 133, or an application 134. Each pr ogramming module may include software, firmware, hardware, or a combination thereo f.

The kernel 131 may control or manage system resources (e.g., the bus 1 10, the processor 120, or the memory 130) used to perform an operation or function of another programming module, for example, the middleware 132, the API 133, or the ap plication 134. Furthermore, the kernel 131 may provide an interface controllable by the middleware 132, the API 133, or the application 134 in relation to collection and trans mission of the location information or reception and output of the disaster-related infor mation of the electronic device 100.

The middleware 132 may serve as an intermediary between the API 133 or the application 134 and the kernel 131 so that the API 133 or the application 134 co mmunicates and exchanges data with the kernel 131. Furthermore, the middleware 132 may perform a control operation (e.g., scheduling or load balancing) with respect to op eration requests received from the application 134 by using, e.g., a method of assigning a priority for using system resources (e.g., the bus 110, the processor 120, or the memo ry 130) of the electronic device 100 to at least one application 134.

The API 133 may be an interface for allowing the application 134 to con trol functions provided by the kernel 131 or the middleware 132. The API 133 may inc lude at least one interface or function (e.g., an instruction) for, for example, file control, window control, image processing, or character control.

The application 134 may include at least one application related to opera tion of the electronic device 100. For example, the application 134 may include applica tions related to a camera function, a music playback function, a video playback functio n, a communication function, a recording function, a game function, a health care functi on, or the like. According to various embodiments of the present disclosure, the applica tion 134 may include a disaster information-related application.

The disaster information-related application may include a location infor mation collection routine (e.g., an instruction, an instruction set, a syntax, a template, or the like) related to location information collection of the electronic device 100), a locat ion information conversion routine for converting a specific type of location informatio n (e.g., latitude/longitude) into another type of location information (e.g., Geohash), an d a location information transmission routine for providing collected location informati on to a specified server device (e.g., DIPD 200). Furthermore, the disaster information-related application may include a disaster-related information reception routine for rece iving the disaster-related information from a specified server device (e.g., DIPD 200), a n output routine related to output (displaying and/or audio / vibratory output) of the dis aster-related information received, and a storage routine related to storage of the disaste r-related information in the memory 130.

The input/output interface (I/O) 140 may transfer an instruction or data i nput by a user through an input/output device (e.g., a sensor, a keyboard, or a touch scr een) to the processor 120, the memory 130, the communication interface 160, or the loc ation management module 170 through the bus 110. According to various embodiment s of the present disclosure, I/O interface 140 may generate an input event related to acti vation or inactivation of a location information sharing function (e.g., providing the loc ation information to DIPD 200) of the electronic device 100 according to manipulation by the user.

I/O interface 140 may perform a function related to audio processing. T o this end, I/O interface 140 may include one or more speakers and/or one or more micr ophones. I/O interface 140 may support output of at least one of audio data for providi ng a guide on reception of the disaster-related information or audio data according to ou tput of the disaster-related information (e.g., text to speech (TTS)).

The display 150 may display various information (e.g., multimedia data, text data, and the like). For example, the display 150 may output a lock screen, a stand by screen, or the like. The display 150 may output a specific function execution screen such as a sound source playback screen, a video playback screen, a broadcast receiving screen, or the like according to execution of a function. The display 150 according to v arious embodiments of the present disclosure may output an information screen related to reception notification of the disaster-related information or a screen including at least one of a text or an image corresponding to the contents of the disaster-related informati on.

The communication interface 160 may establish a communication conne ction between the electronic device 100 and a server device (e.g., DIPD 200). For exa mple, the communication interface 160 may be connected to the network 162 on the ba sis of a wireless or wired communication technology so as to communicate with the ser ver device. The wireless communication technology may include at least one of wirele ss fidelity (Wi-Fi), Bluetooth (BT), near field communication (NFC), global positionin g system (GPS), or cellular communication (e.g., LTE, LTE-A, CDMA, WCDMA, UM TS, WiBro, GSM or any suitable protocol). The wired communication technology ma y include at least one of universal serial bus (USB), high definition multimedia interfac e (HDMI), recommended standard 232 (RS-232), or plain old telephone service (POTS ).

The communication interface 160 may transmit, for example, the locatio n information or converted location information (e.g., Geohash information correspondi ng to collected latitude/longitude) to DIPD 200 according to control by the location ma nagement module 170 in real time or periodically at a certain period. The communicati on interface 160 may receive the disaster-related information from DIPD 200, and may transfer the disaster-related information to at least one of the memory 130 or the display 150 according to control by the location management module 170.
The location information collecting module 180 (interchangeably, "collecting module 1 80") may receive current location information of the electronic device 100. For exampl e, collecting module 180 may include a GPS module. Collecting module 180 may recei ve latitude and longitude information of the electronic device 100. Collecting module 1 80 may control the communication interface 160 so that the current location informatio n of the electronic device 100 is calculated. For example, collecting module 180 may c alculate the current location information using base station location information provid ed from a plurality of base stations or femto cell location information provided from a p lurality of femto cell stations. Alternatively, the location information collecting module 180 may calculate the current location information of the electronic device 100 using a plurality of access points (APs). Collecting module 180 may transfer collected locatio n information (e.g., latitude and longitude information) to the location management mo dule 170.

The location management module 170 may control location information collectio n of collecting module 180. The location management module 170 may transmit, to DI PD 200, the location information collected from collecting module 180. Location mana gement module 170 may convert collected location information into another type of loc ation information (e.g., Geohash information), and may transmit the converted location information to DIPD 200. Upon receiving the disaster-related information from DIPD 200, location management module 170 may output the disaster-related information, or provide the information to processor 120 for suitable outputting thereby. Location mana gement module 170 may include at least one processor or may be formed by at least on e processor.

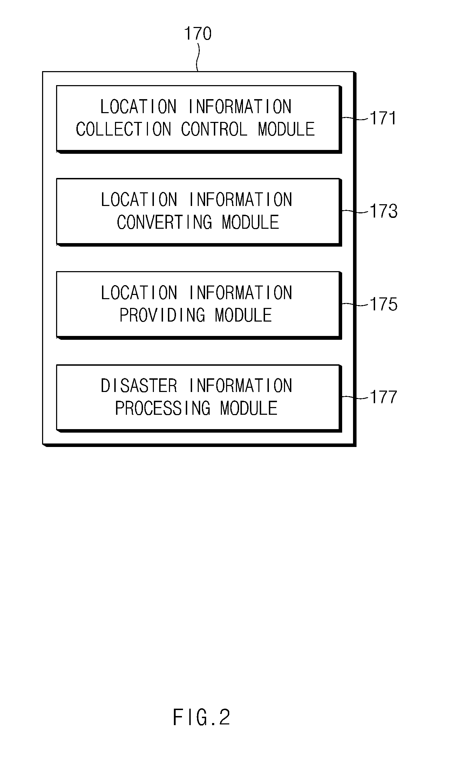

FIG. 2 illustrates an example of a location management module 170 of d evice 100 according to various embodiments of the present disclosure. Location manag ement module 170 may include a location information collection control module 171 (" collection control module 171"), a location information converting module 173 ("conve rting module 173"), a location information providing module 175, and a disaster inform ation processing module 177. Note that converting module 173 may be omitted from lo cation management module 170 if conversion from latitude / longitude to hash code is performed by DIPD 200 rather than by device 100.

Collection control module 171 may check whether there is a setting for disaster information notification. In the case where the disaster information notificatio n is set, collection control module 171 may control the location information collecting module 180 at a specified period or in real time so as to collect the location information of the electronic device 100. In various embodiments, collection control module 171 may collect the location information in response to a change in base station used by ele ctronic device 100. Collection control module 171 may collect the location information if the electronic device 100 is switched from a turned-off state to a turned-on state. In response to the electronic device 100 moving at a certain speed or higher, collection co ntrol module 171 may collect the location information in real time or at a certain period

Collection control module 171 may control the communication interface 160 so as to collect the location information of the electronic device 100. If it is diffic ult to collect the location information using the location information collecting module 180 (e.g., if module 180 is located in an area in which it is unable to receive a signal), c ollection control module 171 may control the communication interface 160 so as to coll ect the location information of the electronic device 100. Collection control module 17 1 may provide collected location information to the location information converting mo dule 173 or the location information providing module 175 according to a policy or wh ether the location information converting module 173 is incorporated. The location inf ormation transferred according to control by collection control module 171 may include latitude and longitude information.

The location information converting module 173 (hereafter, "converting module 173) may calculate Geohash information corresponding to received latitude and longitude information. To this end, converting module 173 may use a calculation algor ithm for calculating the Geohash information mapped to latitude and longitude. Conver ting module 173 may provide converted location information (e.g., Geohash informatio n) to the location information providing module 175.

Converting module 173 may collect a location ID corresponding to recei ved latitude and longitude information. In this regard, converting module 173 may pro vide the latitude and longitude information to a location identification providing device (not shown) directly, or via DIPD 200. Converting module 173 may collect address inf ormation of DIPD 200 in advance. Converting module 173 may also request location I D conversion from DIPD 200, while providing the latitude and longitude information to DIPD 200. DIPD 200 may provide, to the location identification providing device, the latitude and longitude information provided by the electronic device 100 to receive a lo cation ID, and may provide the received location ID to the electronic device 100. Alter natively, converting module 173 may obtain address information of the location identifi cation providing device in advance. Converting module 173 may request the location I D from the location identification providing device, while providing the latitude and lo ngitude information to the location identification providing device at the obtained addre ss. The location identification providing device may have location ID mapping informa tion for each area according to latitude and longitude.

Upon receiving location information (converted to hash code as discusse d above, or unconverted), the location information providing module 175 ("providing module 175") may transfer the location information to DIPD 200. Note that such locat ion information may only be transmitted to DIPD 200 if it has changed from previously transmitted location information. In this regard, upon receiving the location informatio n, providing module 175 may check previously stored location information of the electr onic device 100 and make a comparison. If the newly collected location information is unchanged from that stored, network traffic may be reduced by not re-transmitting the same location information. In another approach, providing module 175 may determine whether a current location ID is identical to a previously stored location ID. If the curr ent location ID is not identical to the stored location ID, providing module 175 may pro vide the location ID and the converted location information to DIPD 200.

The disaster information processing module 177 (hereafter, processing module 177) may receive the disaster-related information from DIPD 200. Upon receiv ing the disaster-related information, processing module 177 may output the disaster-rel ated information using at least one of the display 150 or speaker of I/O interface 140. P rocessing module 177 may output the disaster-related information in different forms ac cording to a grade (or level) of the disaster-related information. For example, processin g module 177 may differentiate an output form for emergency information (e.g., at least one of lamp flickering, a screen display message, a guide message, and a magnitude pa ttern) from an output form for normal (i.e., non-disaster) information.

Processing module 177 may receive information on a disaster type, a dis aster scale, a disaster range, or the like, and may output the received information as a di saster-related image with a certain format. The disaster-related image may include a di saster occurrence place, a current location of the electronic device 100, urgency of a dis aster according to the location of the electronic device 100, or the like. Alternatively, th e disaster-related image may be generated by processing module 177 on the basis of inf ormation received from DIPD 200. Alternatively, processing module 177 may receive t he disaster-related image in which the location of the electronic device 100 is marked.

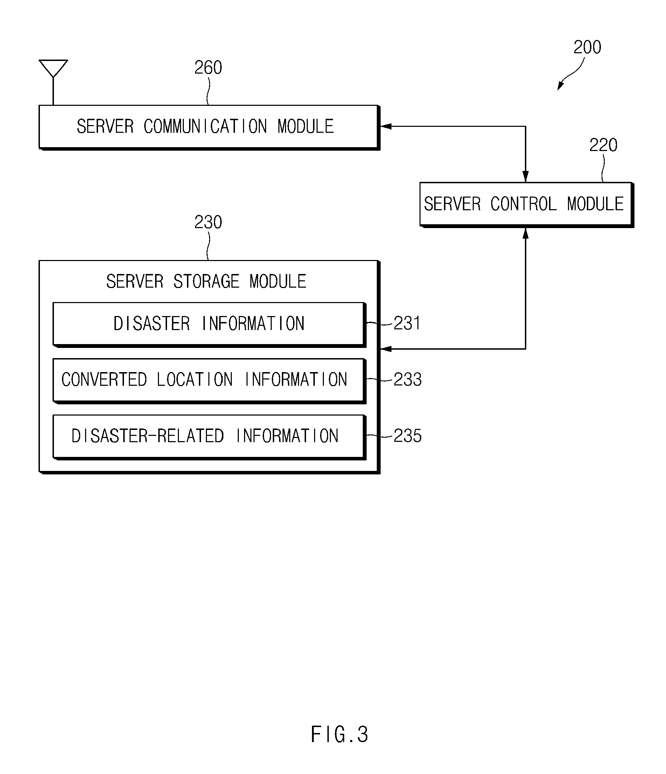

FIG. 3 illustrates an example of a disaster information providing device (DIPD) 200 according to various embodiments of the present disclosure. DIPD 200 ma y include a server communication module 260, a server storage module 230, and a serv er control module 220.

The server communication module 260 may establish a communication channel to the electronic device 100 via the network 162. Module 260 may receive the location information, the converted location information, or the location ID and the con verted location information from the electronic device 100. Module 260 may provide, t o the location identification providing device, the location information received from th e electronic device 100, and may receive a location ID value. Module 260 may receive the disaster information from DICD 300. Module 260 may transmit, to the electronic d evice 100, the disaster-related information associated with the disaster information acco rding to control by the server control module 220.

The server storage module 230 may store programs and data required for operating DIPD 200. Furthermore, the server storage module 230 may store various in formation related to a disaster information notification function. For example, the serv er storage module 230 may store disaster information 231, converted location informati on 233, and disaster-related information 235. The disaster information 231 may be pro vided by DICD 300. The disaster information 231 may include information such as a d isaster type, a disaster scale, a disaster occurrence location, a disaster occurrence time, or the like. For example, the disaster information 231 may be temporarily stored while being received from the disaster information collecting device 300, and then may be co nverted into the disaster-related information 235 so as to be stored or deleted. The disa ster-related information 235 may include the disaster information 231 and disaster coun termeasure information. The disaster countermeasure information may include pertinen t information for each grade defined according to the disaster type and scale (e.g., emer gency countermeasure information to be provided for an emergency zone or normal, i.e ., non-disaster, countermeasure information to be provided for a normal zone) and code of conduct information to be performed according to at least one of the disaster type, th e disaster scale, or the disaster occurrence time. At least part the disaster-related inform ation 235 may be transmitted to the electronic device 100 via the server communication module 260. The converted location information 233 may include at least one of the lo cation ID or the converted location information provided by the electronic device 100. The converted location information 233 may be updated according to movement of the electronic device 100.

The server control module 220 may perform data transfer or signal proce ssing related to operation of DIPD 200. For example, the server control module 220 m ay control conversion of the location information, storage of the converted location info rmation, collection of the disaster information, generation of the disaster-related inform ation, or the like.

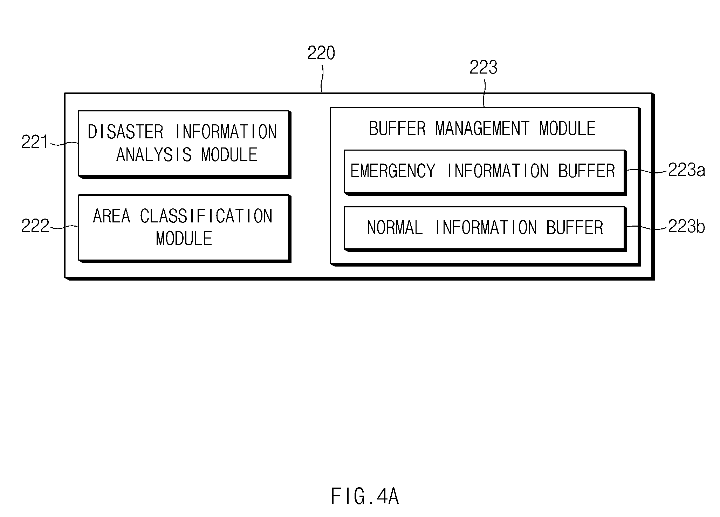

FIG. 4A illustrates an example of a server control module 220 according to various embodiments of the present disclosure. In this example, server control modu le 220 may include a disaster information analysis module 221 ("analysis module 221") , an area classification module 222, and a buffer management module 223.

Upon receiving the disaster information 231 from DICD 300, analysis m odule 221 may analyze the received disaster information 231 to generate the disaster-rel ated information 235. In this regard, DIPD 200 may maintain an information table. Th e information table may include information on a damage-expected zone according to t he disaster type and scale. Alternatively, the information table may include information on a plurality of damage-expected zones for each grade according to the disaster type a nd scale.

Analysis module 221 may determine a damage zone on the basis of the i nformation table, the disaster occurrence place, and the disaster type and scale. Such de termination may involve mapping and/or performing calculations of zone boundaries. For example, analysis module 221 may calculate boundaries of a damage-expected zon e corresponding to an earthquake magnitude on the basis of the information table. Anal ysis module 221 may map a calculation result to an epicenter so as to calculate a damag e zone. Analysis module 221 may calculate a damage-expected zone corresponding to an amount of heavy rain (predicted amount) on the basis of the information table, and may map a calculation result to a heavy rain area to calculate a damage zone.

Analysis module 221 may calculate a plurality of damage-expected zone s for each grade according to the disaster type and scale. Analysis module 221 may ma p a plurality of calculated damage-expected zones for each grade to the disaster occurre nce place so as to calculate a plurality of damage zones for each grade. For example, a nalysis module 221 may designate an area within a certain distance from the disaster oc currence place as an emergency zone of a disaster corresponding to a specific type and scale. Analysis module 221 may designate an area outside the emergency zone as a nor mal (non-emergency) zone of a specific disaster. Thus a damage zone may be designat ed as an emergency zone or a normal zone, depending on the conditions regarding pote ntial loss of life.

Analysis module 221 may add the disaster countermeasure information t o the disaster information 231 to generate the disaster-related information 235. Further more, analysis module 221 may add respective parts of the disaster countermeasure inf ormation corresponding to damage zones for each grade to the disaster information 231 to generate the disaster-related information 235. For example, analysis module 221 ma y add emergency disaster countermeasure information for devices 100 in the emergenc y zone to generate emergency disaster-related information. Analysis module 221 may a dd normal disaster countermeasure information for devices in the normal zone to gener ate normal disaster-related information. Analysis module 221 may transfer, to the area classification module 222, the same damage zone information, or, specific damage zone information for each grade of the disaster-related information 235. Analysis module 22 1 may provide the disaster countermeasure information to the buffer management modu le 223.

The area classification module 222 may classify the electronic devices 1 00 to which the disaster countermeasure information is to be provided, on the basis of t he damage zone information provided by analysis module 221. For example, analysis module 221 may filter the electronic devices 100 positioned within a certain distance fr om the disaster occurrence place. Analysis module 221 may collect identification infor mation of the filtered electronic devices 100 (e.g., information required for establishing a communication channel to the electronic device 100 to which the disaster countermea sure information is to be provided). For instance, the area classification module 222 m ay arrange the electronic devices 100 for each area on the basis of the converted locatio n information (Geohash information) previously stored in relation to the electronic devi ces 100. The area classification module 222 may compare a damage zone defined acco rding to the disaster occurrence place and the disaster type and scale of the disaster info rmation 231 with information on arrangement of the electronic devices 100 for each are a. The area classification module 222 may filter the electronic devices 100 positioned i n a specific area on the basis of a result of the comparison. Area classification module 222 may collect identification information including identification information of the el ectronic devices 100 positioned in the emergency zone and identification information o f the electronic devices 100 positioned in the normal zone on the basis of the damage z one information for each grade provided by the analysis module 221. The area classific ation module 222 may provide the identification information to the buffer management module 223.

The buffer management module 223 may receive the emergency disaster -related information and the normal disaster-related information from the disaster infor mation analysis module 221. The buffer management module 223 may receive, from th e area classification module 222, the identification information of the electronic devices 100 positioned in the emergency zone and the identification information of the electron ic devices 100 positioned in the normal zone. The buffer management module 223 may include an emergency information buffer 223a and a normal information buffer 223b. The buffer management module 223 may assign the emergency disaster-related informa tion and the identification information of at least one electronic device 100 positioned i n the emergency zone to the emergency information buffer 223a. The buffer managem ent module 223 may assign the normal disaster-related information and the identificatio n information of at least one electronic device 100 positioned in the normal zone to the normal information buffer 223b.

The buffer management module 223 may process data stored in the emer gency information buffer 223a and the normal information buffer 223b according to a s et policy. For example, the buffer management module 223 may issue commands for t he data stored in the emergency information buffer 223a to be transmitted to the electr onic device 100. If processing of the data stored in the emergency information buffer 2 23a is completed, the buffer management module 223 may issue commands for the dat a stored in the normal information buffer 223b to be transmitted to the corresponding el ectronic device 100. After elapse of a specified time, the buffer management module 2 23 may move at least a part of the data stored in the normal information buffer 223b to t he emergency information buffer 223a. Alternatively, after elapse of the specified time, the buffer management module 223 may control processing of at least a part of the data stored in the normal information buffer 223b.

In embodiments described above, a damage zone for each grade may be divided into the emergency zone and the normal zone and the emergency disaster-relate d information and the normal disaster-related information are processed. In other embo diments, DIPD 200 may define a damage zone as a single zone, and may collect the ide ntification information of the electronic devices 100 ("the ID information") positioned i n the damage zone. After collecting the ID information, DIPD 200 may provide the dis aster-related information to the electronic devices 100. Alternatively, DIPD 200 may di vide the damage zone into three zones (e.g., an emergency zone, a caution requiring zo ne, and a normal zone), and may collect the ID information for each zone. DIPD 200 may provide the disaster-related information for each zone to the electronic devices 100 positioned in each zone using the ID information obtained for each zone. Alternatively , DIPD 200 may divide the damage zone into four or more zones, and may perform noti fication of the disaster-related information for each zone.

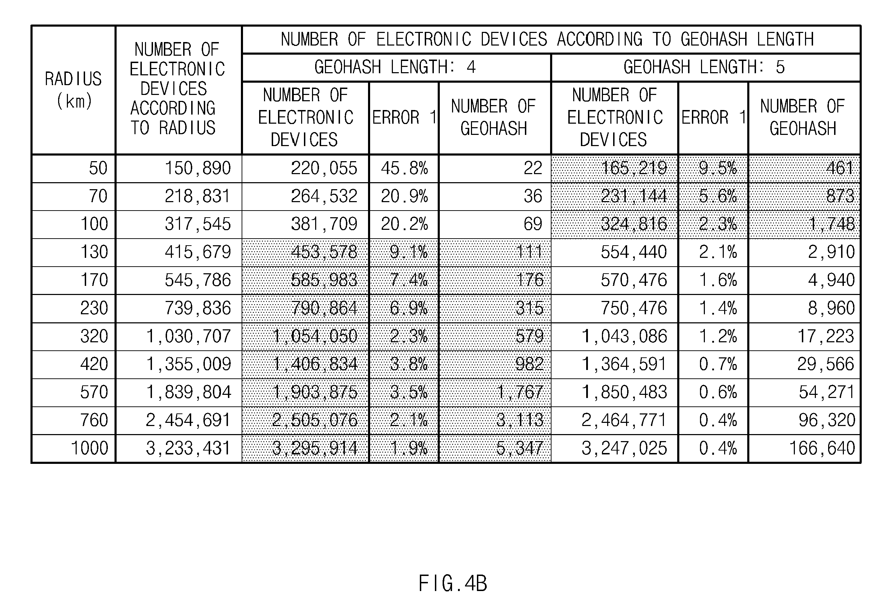

FIG. 4B illustrates an example of how converted location information m ay be collected according to various embodiments of the present disclosure. As describe d earlier, a plurality of electronic devices may collect location information thereof and may provide the location information to DIPD 200. DIPD 200 may convert the receive d location information into a specific type of information, for example, Geohash-type i nformation, or the electronic devices may provide the location information already con verted For example, Geohash information having 12 digits according to the latitude and longitude information of the electronic device 100 may be used to define a position wit h high accuracy. However, if Geohash information having a smaller number of digits ( e.g., four or five digits) according to the latitude and longitude information is used, the corresponding position may have a larger error possibility, but the amount of data traffi c to exchange the position information may be significantly reduced for the case of a lar ge number of electronic devices 100 exchanging position information.

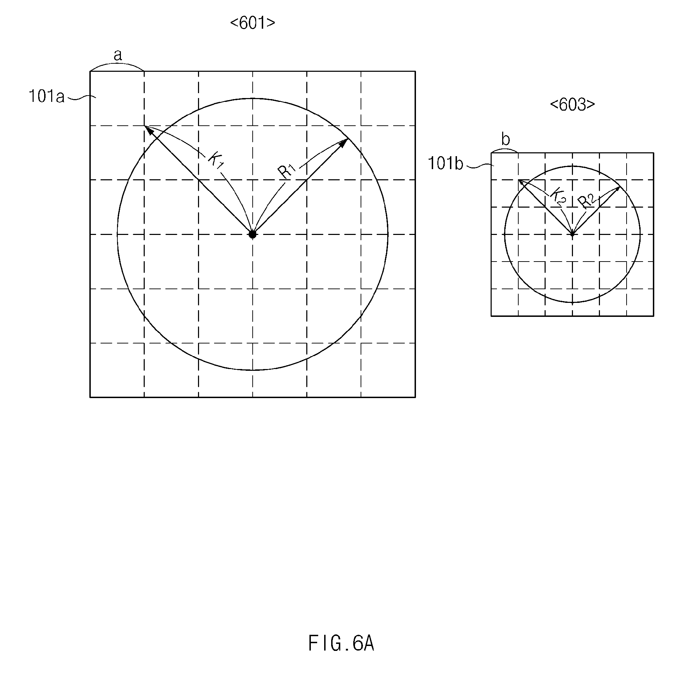

FIG. 4B is a table with example information on errors that may be expec ted when four digit and five digit Geohash numbers are used to provide position inform ation, as a function of various disaster zone radii. As explained more fully below with r eference to FIG. 6A, DIPD 200 may calculate a circular area with a radius of a disaster zone, and approximate the circular area with cells, each identified by a unique Geohash number. Cells that have an area falling at least partly within the circular area may be co nsidered as being a part of the disaster zone. The size of each cell depends on the numb er of digits in the Geohash number. A cell with a four digit number corresponds to a lar ger cell area than a cell with a five digit number.

With continued reference to FIG. 4B, in the example of a 50km disaster zone radi us, it is assumed that 150,890 devices are located within the circular area with that radi us. If the circular area is approximated using cells defined by a four digit Geohash num ber, then the approximated area for these cells is significantly larger than the circular ar ea, so that 220,055 devices may exist within the approximated area. (There would be 2 2 Geohash cells in this case, as indicated by the value in the "Number of Geohash" colu mn.) As a result, an error rate of 220,055 / 150,890 = 45.8% may be calculated. This sig nifies that 45.8% more electronic devices 100 would be assumed to fall within the disas ter zone, and these extra devices might be provided with the same disaster zone informa tion as those devices that are actually within the disaster zone. On the other hand, if a f ive digit Geohash code was to be used, 461 smaller cells would approximate the circula r area, and a much lower error rate of 9.5% would result.

It is seen that the error rate is at least about 20% at a radius of about 100 km in th e case where the Geohash information is a four digit number. Furthermore, it may be u nderstood that the error rate is about 10% or less at a radius of about 100km or less in t he case where the Geohash information is a five digit number. DIPD 200 may determin e, on the basis of a specified error rate policy (e.g., about 10%), the number of digits of the Geohash information to be applied to filter / categorize the electronic devices 100 a ccording to the disaster scale. For example, in the case where the disaster scale is a radi us of about 50 km or less, DIPD 200 may filter the electronic devices 100 on the basis o f five digits of the Geohash information. Furthermore, in the case where the disaster sc ale is a radius of at least about 130 km, DIPD 200 may filter the electronic devices 100 on the basis of four digits of the Geohash information. By adjusting the number of digi ts of the Geohash information, DIPD 200 may improve a rate or accuracy of filtering th e electronic devices 100. The radius may be adjusted according to the disaster scale an d type or the like. Furthermore, the radius may be adjusted according to the disaster oc currence place.

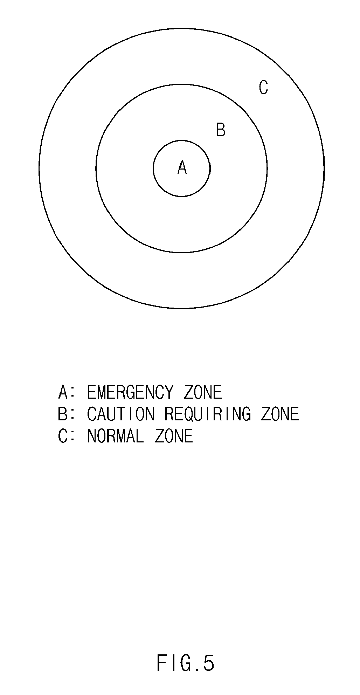

FIG. 5 illustrates an example of a disaster-related information notificatio n zone for each grade according to various embodiments of the present disclosure. DIP D 200 may differently define at least one of the size and number of damage zones for e ach grade according to at least one of the disaster occurrence place, the disaster type, an d the disaster scale. For example, DIPD 200 may define three damage zones for each g rade according to a specific disaster occurrence place, a specific disaster type, and a spe cific disaster scale, as illustrated in FIG. 5. The three damage zones for each grade may include, for example, an emergency zone A, a caution requiring zone B, and a normal z one C. Different parts / types of disaster-related information may be provided to the da mage zones for each grade, such as the emergency zone A, the caution requiring zone B , and the normal zone C, at different times. When calculating the identification informa tion of the electronic devices 100, DIPD 200 may preferentially calculate the identificat ion information of the electronic devices 100 adjacent to the disaster occurrence place.

DIPD 200 may define the number of damage zones differently for each grade according to the disaster type. For example, DIPD 200 may define three damage zones for each grade when an earthquake disaster occurs. For example, DIPD 200 may define two damage zones for each grade when a heavy rain disaster occurs. For examp le, DIPD 200 may define one damage zone for each grade when a fire disaster occurs.

DIPD 200 may define the size of a damage zone differently for each gra de according to the disaster scale. For example, DIPD 200 may define the size of a da mage zone differently for each grade according to the magnitude of an earthquake. Fur thermore, DIPD 200 may define the size of a damage zone respectively for each grade according to the disaster type. For example, the sizes of damage zones for each grade o f an earthquake may be defined respectively from the sizes of damage zones for each gr ade of tsunami.

DIPD 200 may respectively define at least one of the number or sizes of damage zones according to a characteristic of the disaster occurrence place, such as the population thereof. DIPD 200 may control selection of the number of digits of the Geo hash information of the electronic devices 100 to be filtered in relation to determined d amage zones.

DIPD 200 may respectively set the number of digits of the Geohash info rmation for filtering according to at least one of the characteristic of the disaster occurr ence place, the disaster type, or the disaster scale. For example, in the case where a dis aster occurs in an overpopulated area, DIPD 200 may select a relatively small number o f digits (e.g., four digits) of the Geohash information, in order to reduce the amount of data traffic for exchanging large amounts of location data between devices 100 and DIP D 200. In the case where a disaster occurs in a densely populated area (with lower popu lation than that of an overpopulated area), DIPD 200 may select a relatively large numb er of digits (e.g., five digits) of the Geohash information. In the case where a disaster o ccurs in a low population area, DIPD 200 may select a relatively larger number of digit s (e.g., at least six digits) of the Geohash information. As described above, DIPD 200 may convert the 12-digit Geohash information related to the electronic device 100 into a certain number of digits (e.g., only a certain number of digits are selected and the rem aining digits are discarded) specified according to at least one of the disaster occurrence place, the disaster type, or the disaster scale.

DIPD 200 may adjust the number of digits of the Geohash information t o be applied according to the number and sizes of damage zones. For example, in the c ase where there are three damage zones and a maximum radius of a disaster damage zo ne is about 100 km or less, DIPD 200 may divide the Geohash information into five dig its so as to filter the electronic devices 100. In the case where the maximum radius of a disaster damage zone is about 1000 km or less, DIPD 200 may divide the Geohash info rmation into four digits so as to filter the electronic devices 100.

DIPD 200 may apply the number of digits of the Geohash information di fferently according to a distance to a disaster occurrence center. For example, DIPD 20 0 may determine a larger number of digits of the Geohash information as the distance t o the disaster occurrence center is shorter. DIPD 200 may determine a smaller number of digits of the Geohash information as the distance to the disaster occurrence center is longer. As described above, DIPD 200 may filter the electronic devices 100 to which th e emergency disaster-related information is to be transmitted, using the Geohash inform ation that is relatively more specific if a disaster damage zone is within a certain distanc e from the disaster occurrence place. DIPD 200 may filter the electronic devices 100 to which the emergency disaster-related information is to be transmitted, using the Geoha sh information that is relatively sparser if the outer boundaries of a disaster damage zon e are far away, i.e., at least a certain distance from the disaster occurrence place.

FIG. 6A exemplarily illustrates a method of calculating a disaster-related information notification zone according to various embodiments of the present disclos ure. First, DIPD 200 may define a circular area within a certain radius from the disaste r occurrence place as a damage zone, when the disaster information is received. DIPD 200 may approximate the circular area using converted location information stored and managed by DIPD 200. This converted location information may represent variously si zed cells (also referred to as blocks), which are geometrical regions such as quadrangle s represented by Geohash information. Each cell may be defined by a Geohash code re presenting a range of latitude and a range of longitude defining sides of the cell. The c ombined latitude / longitude values of a Geohash code may define a quadrangular cell. Accordingly, DIPD 200 may calculate cells corresponding to the Geohash information positioned approximately within or on the boundary of a circle with a certain radius, an d may "filter" the electronic devices 100 having the Geohash information matching that of the calculated cells. In other words, DIPD 200 may assume that any device 100 hav ing a Geohash value that matches any of the Geohash values of cells being at least partl y within the circular area, is a device located within the disaster zone. Thus, some devic es 100 may be classified as falling within the disaster zone, while others are classified a s falling outside the disaster zone.

In this regard, DIPD 200 may obtain cell location information (e.g. locat ions of corners of a cell) and cell size information on the basis of the Geohash informati on. (Since the Geohash information is obtained by segmenting the entire earth into cell s having a certain size, size and location information of a cell corresponding to the Geo hash information of a specific area may be calculated on the basis of the allowable rang e of latitude and longitude information for a Geohash code representing the cell.) DIP D 200 may calculate a distance from the disaster occurrence place to the nearest corner, or each corner of a cell (e.g., the nearest corner of four corners if the Geohash informat ion is a quadrangle) corresponding to specific Geohash information. If the distance fro m the disaster occurrence place to the nearest corner of the cell is larger than a disaster radius, DIPD 200 may determine that the corresponding Geohash information is not rel ated to a disaster zone, i.e., that the cell represented by the Geohash information is outsi de the disaster zone. If the distance from the disaster occurrence place to the nearest co rner of the cell is smaller than the disaster radius, DIPD 200 may determine that the cell is at least partly within the disaster zone. On the basis of the above-mentioned operati on, the Geohash information that belongs to the damage zone, or to the damage zone fo r each grade may be calculated.

DIPD 200 may determine the number of digits (e.g., four digits) of the G eohash information according to at least one of the disaster occurrence place, the disast er type, or the disaster scale. If the number of digits of the Geohash information is dete rmined by DIPD 200, the Geohash information of cells corresponding to the number of digits, for example, quadrangles having a side length of "a", may be calculated as illustr ated in a state 601. DIPD 200 may compare a distance K1 between a nearest corner of a specific cell 101a and the center of the disaster occurrence place with a disaster radius R1 (radius determined according to at least one of the disaster occurrence place, the dis aster type, or the disaster scale). DIPD 200 may exclude the cell 101a from the damage zone since the distance K1 is larger than the radius R1.

DIPD 200 may determine that the number of digits of the Geohash infor mation should be five according to at least one of the disaster occurrence place, the disa ster type, or the disaster scale. Accordingly, as illustrated in a state 603, the Geohash in formation including quadrangles having a side length of "b", which corresponds to five -digit Geohash information, may be collected. DIPD 200 may collect the Geohash info rmation within a certain range from the disaster occurrence place. DIPD 200 may com pare a distance K2 between a nearest corner of a block 101b and the center of the disast er occurrence place with a disaster radius R2 so as to determine whether the cell 101b b elongs to the damage zone. In this manner, DIPD 200 may calculate the Geohash infor mation that belongs to the damage zone. The calculated Geohash information may be u sed to filter / classify the electronic devices 100.

According to various embodiments, DIPD 200 may classify and store th e Geohash information of the electronic devices 100 on the basis of a certain digit unit ( or level). For example, in relation to the collected Geohash information of the electroni c devices 100, DIPD 200 may define three-digit Geohash information in a column direc tion and may define four-digit Geohash information or four- and five-digit Geohash inf ormation in a row direction. On the basis of this configuration, DIPD 200 may store an d manage the converted location information 233 in which the identification informatio n of the electronic devices 100 is arranged at locations where digit numbers intersect wi th each other. If a disaster occurs, DIPD 200 may define a location of occurrence of the disaster, the number of damage zones to be applied, and sizes of the damage zones, ma y calculate the Geohash information (Geohash codes) associated with the damage zones , and may compare the Geohash information with the converted location information 23 3. With these operations, DIPD 200 may classify the identification information of elect ronic devices for each damage zone.

If a plurality of damage zones for each grade are defined, DIPD 200 ma y calculate the ID information of the electronic devices for each damage zone such that the ID information corresponding to one damage zone does not overlap with that corres ponding to another damage zone. For example, DIPD 200 may preferentially calculate the ID information of the electronic devices 100 of the emergency zone adjacent to the disaster occurrence place. DIPD 200 may exclude the calculated ID information corre sponding to the emergency zone from the converted location information 233 so that th e calculated ID information is not repeatedly calculated while the ID information corres ponding to the caution requiring zone is calculated.

An electronic device according to an embodiment of the present disclosu re may include a location information collecting module configured to collect location i nformation, and a location management module configured to convert the collected loc ation information into specified code information to transmit the collected location info rmation to a disaster information providing device for which location information mana gement is required in relation to provision of disaster information.

The location management module may perform control so that current c ode information is transmitted to the disaster information providing device if code infor mation corresponding to currently collected location information is different from previ ously collected code information.

The location management module may convert location information incl uding latitude and longitude information into Geohash information having an entire nu mber of digits or a specified number of digits.

The location management module may receive and process, from the dis aster information providing device, disaster-related information corresponding to a disa ster that has occurred in a location corresponding to the code information.

The location management module may perform control so that the recei ved disaster-related information is output in different display forms according to a grad e of the received disaster-related information.

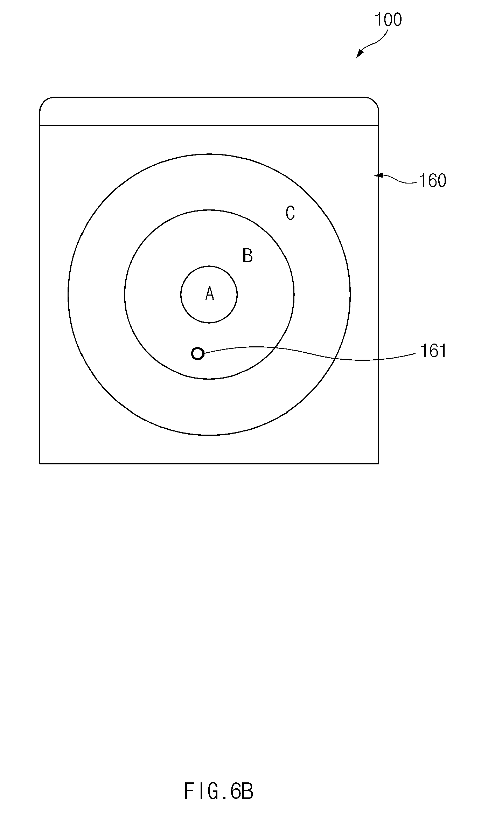

FIG. 6B exemplarily illustrates screen interface of electronic device related to a disaster-related information notificatio n zone according to various embodiments of the present disclosure.

Referring to Fig. 6B, the processor(or location management module) ma y perform control so that an image in which a plurality of damage zones(ex: A, B, C) ar ranged around a disaster occurrence place and a current location 161 of the electronic device 100 among the plurality of damage zones are marked is output.

The location management module may perform control so that an image corresponding to damage zones of which the number and sizes are differently defined a ccording to at least one of the disaster occurrence place, a disaster type, or a disaster sc ale is output.

The location management module may perform control so that the locati on information is collected in real time or at a certain period or in response to base stati on switching or specified event occurrence.

A disaster information providing device according to an embodiment of the present disclosure may include a server storage module configured to store code inf ormation related to a location of an electronic device, a server communication module c onfigured to receive disaster information including at least one of a disaster occurrence place, a disaster type, or a disaster scale, and a server control module configured to calc ulate at least one damage zone on the basis of at least one of the disaster occurrence pla ce, the disaster type, or the disaster scale, and transmit disaster-related information to th e electronic device having the code information matched to the damage zone.

The server control module may receive location information including la titude and longitude information from the electronic device, may calculate the code info rmation corresponding to the location information, and may transmit the code informati on to the electronic device.

Upon receiving a code information registration request from the electron ic device, the server control module may store the code information of the electronic de vice in the server storage module.

The server control module may differently define at least one of the num ber of the damage zones or sizes of the damage zones according to a population density of the disaster occurrence place, the disaster type, or the disaster scale.

The server control module may preferentially filter the code information of electronic devices on the basis of the code information corresponding to a damage z one adjacent to the disaster occurrence place among a plurality of damage zones to calc ulate identification information of the electronic devices to which the disaster-related in formation is able to be transmitted.

The server control module may preferentially transmit the disaster-relate d information to the damage zone adjacent to the disaster occurrence place among the p lurality of damage zones.

The server control module may generate the disaster-related information to be transmitted to the plurality of damage zones with different contents and at differe nt times.

The server control module may include at least one buffer for storing the disaster-related information to be transmitted to each damage zone at different times.

The server control module may differently determine the number of digit s of the code information according to at least one of the disaster occurrence place, the disaster type, or the disaster scale.

The server control module may differently determine the number of digit s of the code information to be applied according to the size of the damage zone.

The server control module may differentiate the number of digits of the code information of the electronic device to store the code information for each level.

The server control module may compare a radius of the damage zone de fined according to the disaster occurrence, the disaster type, and the disaster type with a distance from a center of the disaster occurrence place to a corner of a figure correspon ding to the code information to calculate pieces of the code information of which the di stance to the center of the disaster occurrence place is shorter than the radius.

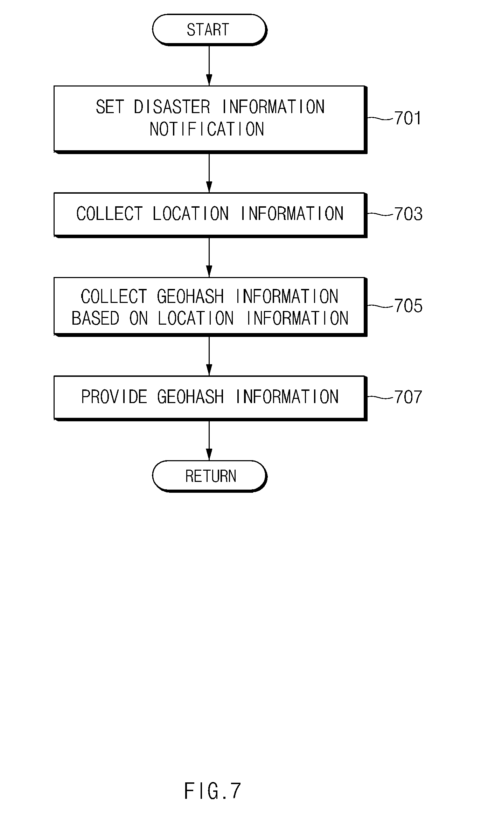

FIG. 7 illustrates an electronic device operating method related to locati on information provision according to various embodiments of the present disclosure. The location management module 170 may perform disaster information notification se tting in operation 701. Module 170 may provide a menu item or icon related to the disa ster information notification setting. Module 170 may support a disaster information n otification function when a corresponding menu or icon is selected. In the case where t he disaster information notification setting is designed to be performed by default (e.g., automatically, or at the time of manufacture, or at the time of subscription of a commun ication service provider), the notification information notification setting of operation 7 01 may be skipped.

In operation 703, module 170 may control location information collectio n. If the disaster information notification setting is in an active state, module 170 may activate the location information collecting module 180 in real time or at a certain perio d or in response to occurrence of a specified event to collect location information. For example, module 170 may collect the latitude and longitude information of the electron ic device 100 periodically at a certain period.

If the latitude and longitude information is collected, module 170 may o btain the Geohash information based on the location information in operation 705. To t his end, the electronic device 100 may include an algorithm or software module for calc ulating the Geohash information corresponding to latitude and longitude. Module 170 may calculate the Geohash information corresponding to latitude and longitude using th e algorithm or software module. Electronic device 100 may provide collected latitude a nd longitude information to DIPD 200 in relation to calculation of the Geohash informa tion. In this regard, module 170 may establish a communication channel to DIPD 200 on the basis of connection information of DIPD 200 which is prestored, or input by the user, or provided by another electronic device. According to various embodiments of the present disclosure, module 170 may request t he Geohash information from DIPD 200, while providing the latitude and longitude inf ormation to DIPD 200.

If the Geohash information is collected, in operation 707, module 170 m ay provide the Geohash information to DIPD 200. Module 170 may store and manage i nformation on a connection to DIPD 200 (e.g., address information of DIPD 200, mess age channel information for transmitting a message to DIPD 200, or the like). The con nection information of DIPD 200 may be collected at the time of manufacture, at the ti me of registration of a communication service provider, or at the time of disaster infor mation notification setting so as to be stored and managed. Module 170 may store and manage previously collected Geohash information. Module 170 may compare currentl y collected Geohash information with previously collected Geohash information. The G eohash information may only be transmitted to DIPD 200 if it has changed from the mo st recent information. In this case, module 170 may transmit the currently collected (i.e. , updated) Geohash information to DIPD 200 when a change is detected. Alternatively, module 170 may automatically transmit the currently collected Geohash information to DIPD 200 without comparing the previously collected Geohash information with the cu rrently collected Geohash information. After providing the Geohash information, modu le 170 may support a function of the electronic device 100 according to manipulation b y the user or according to a set schedule until a specified event occurs or a certain perio d arrives.

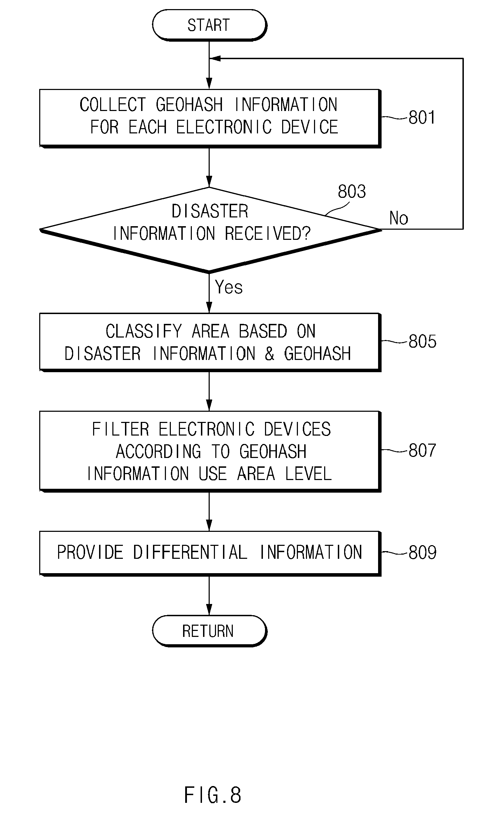

FIG. 8 illustrates a method for operating a disaster information providin g device (e.g. DIPD 200) according to various embodiments of the present disclosure. T he server control module 220 may collect the Geohash information for each electronic device in operation 801. In this regard, the server control module 220 may transmit a message of a request for transmission of converted location information to the electroni c devices 100 for which disaster information notification is set, at a certain period. Alte rnatively, the electronic devices 100 for which disaster information notification is set m ay collect location information in real time or at a certain period or in response to occur rence of a specified event. The electronic devices 100 may transmit, to DIPD 200, con verted location information (Geohash information) obtained by converting the collected location information. Upon receiving the converted location information from the elec tronic device 100, the server control module 220 may store and manage the converted l ocation information in the server storage module 230. In this operation, the server cont rol module 220 may classify and store the converted location information according to a unit of a certain level based on the number of digits. For example, the server control module 220 may store the converted location information 233 with four or five digits. Alternatively, the server control module 220 may arrange the Geohash information of t he electronic device 100 in a database in which information within a certain number of digits is defined in a column and at least a part of the remaining digits is defined in a ro w. In the case where the electronic device 100 provides the location information in the form of the latitude and longitude information, the server control module 220 may conv ert the location information into the Geohash information so as to store and manage the Geohash information.

In operation 803, the server control module 220 may determine whether the disaster information is received. If the disaster information is not received, the proc ess may return to operation 801 so that the server control module 220 may re-perform o peration 801 and the following operations. If the disaster information is received, in op eration 805, the server control module 220 may perform area classification based on the disaster information and the Geohash information. For example, the server control mo dule 220 may calculate the number of damage-expected zones and the sizes of the dam age-expected zones according to at least one of the disaster occurrence place, the disast er type, or the disaster scale. The server control module 220 may map at least one dam age-expected zone to the Geohash information to classify damage zones. For example, the server control module 220 may collect the Geohash information positioned approxi mately within a circular damage zone in operation 805. In this operation, the server co ntrol module 220 may collect the Geohash information of damage zones respectively f or each grade or level. For example, the server control module 220 may collect the Ge ohash information corresponding to the emergency zone, the Geohash information corr esponding to the caution requiring zone, and the Geohash information corresponding to the normal zone.

In operation 807, the server control module 220 may perform electronic device filtering according to a Geohash information use area level. According to an em bodiment, the server control module 220 may identify the electronic devices 100 havin g Geohash information matched to the Geohash information corresponding to the emer gency zone, and may collect the ID information of these electronic devices 100. In ope ration 809, the server control module 220 may transmit the disaster-related information on the basis of the ID information of the electronic devices 100 corresponding to the e mergency zone. For example, the server control module 220 may transmit the emergen cy disaster-related information that has been transmitted to the emergency zone to the e lectronic devices 100 having the corresponding Geohash information.

If filtering of the electronic devices 100 mapped to the emergency zone i s completed, the process may return to operation 807 so that the server control module 220 may perform filtering of the electronic devices 100 mapped to the caution requiring zone. For example, the server control module 220 may calculate the ID information of the electronic devices 100 having the Geohash information matched to the Geohash inf ormation corresponding to the caution requiring zone. In operation 809, the server cont rol module 220 may transmit the disaster-related information to the electronic devices 1 00 positioned in the caution requiring zone. Here, the server control module 220 may p rovide the disaster-related information that is the same as the emergency disaster-relate d information to the electronic devices 100 positioned in the caution requiring zone, or may provide caution requiring disaster-related information generated for the caution req uiring zone to the electronic devices 100. Additionally, the server control module 220 may filter the electronic devices 100 positioned in the normal zone, and may provide th e disaster-related information thereto.

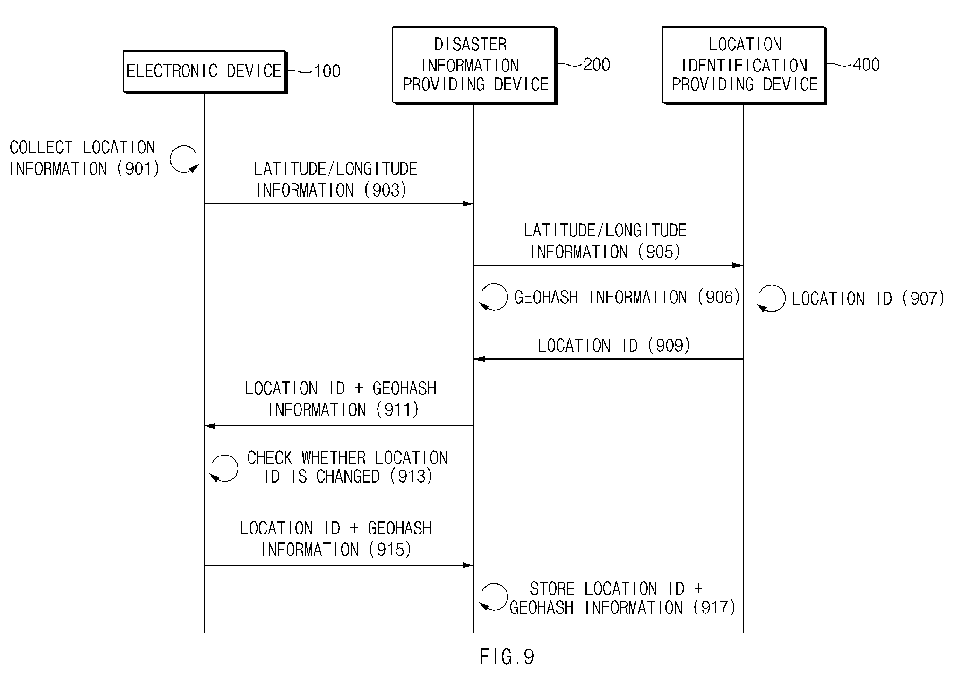

FIG. 9 illustrates a signal flow related to collection of converted location information according to various embodiments of the present disclosure.

In operation 901, the electronic device 100 may collect the location information. For e xample, the electronic device 100 may collect the location information (e.g., latitude an d longitude information) of the electronic device 100 on the basis of at least one of the l ocation information collecting module 180 or the communication interface 160.

In operation 903, the electronic device 100 may provide the collected lat itude and longitude information to DIPD 200. To this end, the electronic device 100 m ay obtain the connection information of DIPD 200 in advance. For example, when the disaster information notification is set, the electronic device 100 may obtain the address information of DIPD 200 and may store and manage the address information.

In operation 905, DIPD 200 may provide the latitude and longitude infor mation to a location identification providing device 400. The location identification pr oviding device 400 may be a server device that provides a location ID corresponding to the latitude and longitude information. Supportable formats of the location ID may be different for each nation or agency. The location ID may be information mapped to the latitude and longitude information. DIPD 200 may provide the latitude and longitude i nformation together with the identification information of the electronic device 100. A ccording to various embodiments, DIPD 200 may collect code information correspondi ng to the latitude and longitude information, for example, the Geohash information.

In operation 907, the location identification providing device 400 may c ollect the location ID corresponding to latitude and longitude. For example, the locatio n identification providing device 400 may provide the location ID corresponding to the latitude and longitude currently provided by the electronic device 100 on the basis of a l ocation ID database in which location IDs are mapped to each latitude and longitude.

In operation 909, the location identification providing device 400 may tr ansmit the location ID to DIPD 200. Device 400 may provide the location ID in associ ation with the identification information of the electronic device 100 provided by DIPD 200.

In operation 911, DIPD 200 may transmit the location ID and the Geoha sh information to the electronic device 100. In this regard, DIPD 200 may obtain the G eohash information using at least one of the collected latitude and longitude informatio n of the electronic device 100 or the location ID. The Geohash information may be ma pped to the latitude and longitude information or the location ID. DIPD 200 may trans mit, to the electronic device 100, the location ID delivered on the basis of the identificat ion information of the electronic device 100 together with the Geohash information.

In operation 913, the electronic device 100 may compare a previously st ored location ID with the location ID provided by DIPD 200 to determine whether the l ocation IDs match each other. If the received location ID is the same as the previously stored location ID, the electronic device 100 may not perform additional location ID tra nsmission. If the received location ID is different from the previously stored location I D, in order to register the corresponding location ID in DIPD 200, the electronic device 100 may provide the location ID and the Geohash information in operation 915. In op eration 917, DIPD 200 may store the received location ID and the Geohash information of the specific electronic device 100 in the server storage module 230. According to va rious embodiments, the electronic device 100 may perform comparison of the Geohash information. The electronic devices 100 may perform transmission of information for r egistering the location ID and the Geohash information according to whether the Geoha sh information matches previously stored Geohash information.

A method for operating an electronic device according to an embodimen t of the present disclosure may include collecting location information, and converting t he collected location information into specified code information to transmit the collect ed location information to a disaster information providing device for which location in formation management is required in relation to provision of disaster information.

The method may further include transmitting current code information t o the disaster information providing device if code information corresponding to curren tly collected location information is different from previously collected code informatio n.

The converting may include converting location information including l atitude and longitude information into Geohash information having an entire number of digits or a specified number of digits.

The method may further include receiving, from the disaster information providing device, disaster-related information corresponding to a disaster that has occu rred in a location corresponding to the code information.

The method may further include outputting the received disaster-related information in different display forms according to a grade of the received disaster-relat ed information.

The outputting may include outputting an image in which a plurality of damage zones arranged around a disaster occurrence place and a current location of the electronic device among the plurality of damage zones are marked.

The outputting may include outputting an image corresponding to dama ge zones of which the number and sizes are differently defined according to at least one of the disaster occurrence place, a disaster type, or a disaster scale.

The collecting of the location information may include collecting the loc ation information in real time or at a certain period or in response to base station switch ing or specified event occurrence.

Moreover, a method for operating a disaster information providing devic e according to an embodiment of the present disclosure may include receiving disaster i nformation including at least one of a disaster occurrence place, a disaster type, or a dis aster scale, calculating at least one damage zone on the basis of at least one of the disast er occurrence place, the disaster type, or the disaster scale, collecting information relate d to at least one electronic device having code information matched to the damage zone on the basis of code information stored in relation to a location of an electronic device, and transmitting disaster-related information to the electronic device.

The method may further include receiving location information includin g latitude and longitude information from the electronic device and calculating the code information corresponding to the location information to transmit the code information to the electronic device.

The method may further include storing the code information of the elec tronic device upon receiving a code information registration request from the electronic device.

The calculating of at least one damage zone may include differently defi ning at least one of the number of the damage zones or sizes of the damage zones accor ding to a population density of the disaster occurrence place, the disaster type, or the di saster scale.

The calculating of at least one damage zone may include preferentially fi ltering the code information of electronic devices on the basis of the code information c orresponding to a damage zone adjacent to the disaster occurrence place among a plural ity of damage zones to calculate identification information of the electronic devices to which the disaster-related information is able to be transmitted.

The transmitting may include preferentially transmitting the disaster-rela ted information to the damage zone adjacent to the disaster occurrence place among the plurality of damage zones.

The method may further include generating the disaster-related informati on to be transmitted to the plurality of damage zones with different contents and at diffe rent times.

The method may further include storing the disaster-related information to be transmitted to each damage zone at different times.

The calculating of at least one damage zone may include differently dete rmining the number of digits of the code information of the damage zone according to a t least one of the disaster occurrence place, the disaster type, or the disaster scale.

The calculating of at least one damage zone may include differently dete rmining the number of digits of the code information of the damage zone to be applied according to the size of the damage zone.

The method may further include differentiating the number of digits of t he code information of the electronic device to store the code information for each level

The calculating of at least one damage zone may include comparing a ra dius of the damage zone defined according to the disaster occurrence, the disaster type, and the disaster type with a distance from a center of the disaster occurrence place to a corner of a cell corresponding to the code information to calculate pieces of the code in formation of which the distance to the center of the disaster occurrence place is shorter than the radius.

In various embodiments, a disaster information providing system includ es a disaster information providing device and a plurality of mobile electronic devices. Each electronic device is capable of determining a current location thereof as being ass ociated with a specific cell of the earth, with the specific cell being defined by digits of a Geohash code. Each electronic device provides the Geohashcode of its current locatio n to the disaster information providing device via a network. The disaster information p roviding device calculates a damage zone on the basis of at least one of a disaster occur rence place, a disaster type, or a disaster scale. The providing device determines cells of the earth identifiable by respective Geohash codes as being at least partly within the da mage zone, and transmits disaster-related information to a subset of the electronic devic es that each have a location matched to the damage zone, as determined by the Geohash codes transmitted to the disaster information providing device.

The term "module" used herein may represent, for example, a unit inclu ding one or more combinations of hardware, software and firmware. The term "module " may be interchangeably used with the terms "unit", "logic", "logical block", "compon ent" and "circuit". The "module" may be a minimum unit of an integrated component or may be a part thereof. The "module" may be a minimum unit for performing one or more functions or a part thereof.

According to various embodiments of the present disclosure, at least a p art of devices (e.g., modules or functions thereof) or methods (e.g., operations) accordi ng to various embodiments of the present disclosure may be implemented as instruction s stored in a non-transitory computer-readable storage medium in the form of a progra mming module. In the case where the instructions are performed by at least one proces sor, the at least one processor may perform functions corresponding to the instructions.

The non-transitory computer-readable storage medium may include mag netic media such as a hard disk, a floppy disk, and a magnetic tape, optical media such as a compact disk ROM (CD-ROM) and a digital versatile disc (DVD), magneto-optica l media such as a floptical disk, and a hardware device configured to store and execute program instructions (e.g., a programming module), such as a ROM, a RAM, and a flas h memory. The program instructions may include machine language codes generated b y compilers and high-level language codes that can be executed by computers using int erpreters. The above-mentioned hardware may be configured to be operated as one or more software modules for performing operations of various embodiments of the prese nt disclosure and vice versa.

According to various embodiments of the present disclosure, a non-trans itory storage medium stores commands executed by at least one processor to instruct th e at least one processor to perform at least one operation, wherein the at least one opera tion may include collecting location information, and converting the collected location i nformation into specified code information to transmit the collected location informatio n to a disaster information providing device for which location information managemen t is required in relation to provision of disaster information.

According to various embodiments of the present disclosure, a non-trans itory computer readable storage medium stores commands executed by at least one pro cessor to instruct the at least one processor to perform at least one operation, wherein th e at least one operation may include receiving disaster information including at least on e of a disaster occurrence place, a disaster type, or a disaster scale, calculating at least o ne damage zone on the basis of at least one of the disaster occurrence place, the disaster type, or the disaster scale, collecting information related to at least one electronic devic e having code information matched to the damage zone on the basis of code informatio n stored in relation to a location of an electronic device, and transmitting disaster-relate d information to the electronic device.

According to various embodiments of the present disclosure, collection of the location information of electronic devices related to provision of the disaster-rela ted information can be safely performed.

Furthermore, according to various embodiments of the present disclosur e, an area for which the disaster-related information is to be provided can be accurately calculated, and the disaster information is classified by grade, so that the disaster infor mation can be quickly transferred to an electronic device positioned in a location for w hich the disaster information is required.

The above embodiments of the present disclosure are illustrative and not limitative. Various alternatives and equivalents are possible. Other additions, subtracti ons, or modifications are obvious in view of the present disclosure and are intended to f all within the scope of the appended claims.

## Claims

1. An electronic device (100) comprising:
a memory (130) for storing collected location information of the electronic device; and
a processor (120) coupled to the memory, and configured to
- convert the collected location information into code information representing a specific area, and to
- transmit the code information to a disaster information providing device (200), and to
- receive emergency disaster-related information from the disaster information providing device (200) based on the location information.

2. The electronic device (100) of claim 1, wherein the current code information is transmitted to the disaster information providing device (200) in response to detecting a change in the code information corresponding to a change in location of the electronic device.

3. The electronic device (100) of claim 1 or 2, wherein the processor (120) is configured to convert the code information into Geohash information.

4. The electronic device (100) of any one of the preceding claims, wherein the processor (120) is configured to receive, from the disaster information providing device (200), disaster-related information corresponding to a disaster that has occurred in a location corresponding to the code information.

5. The electronic device (100) of claim 4, further comprising a display, wherein the processor (120) is configured to output the received disaster-related information in different display forms to the display according to a grade of the received disaster-related information; configured to output on the display an image in which a plurality of damage zones arranged around a disaster occurrence place and a current location of the electronic device among the plurality of damage zones are marked; or configured to output on the display an image corresponding to damage zones of which the number and sizes are differently defined according to at least one of the disaster occurrence place, a disaster type, or a disaster scale is output to the display.

6. The electronic device (100) of any one of the preceding claims, wherein the processor (120) is configured to control collection of the location information in real time, periodically at a certain period, or in response to base station switching or specified event occurrence.

7. A disaster information providing device (200) comprising:
a server storage module (230) for storing disaster information comprising at least one of a disaster occurrence place, a disaster type, or a disaster scale, and storing a plurality of code information corresponding to locations of respective electronic devices (100); and
a server control module (220) coupled to the server storage module and configured to calculate at least one damage zone on a basis of at least one of the disaster occurrence place, the disaster type, or the disaster scale, and to transmit disaster-related information to a subset of the electronic devices each having a location matched to the damage zone, as determined by the code information.

8. The disaster information providing device (200) of claim 7, wherein the server control module (220) is configured to determine a plurality of cells each having an area at least partly within the damage control area, and each cell identifiable by a respective code of the code information; or wherein, upon receiving location information comprising latitude and longitude information from the electronic device (100), the server control module (220) is configured to calculate the code information corresponding to the location information and transmit the code information to the electronic device, and upon receiving a code information registration request from the electronic device, the server control module is configured to store the code information of the electronic device in the server storage module (230).

9. The disaster information providing device (200) of any one of the claims 7-8, wherein the server control module (220) is configured to define at least one of the number of the damage zones or sizes of the damage zones differently according to a population density of the disaster occurrence place, the disaster type, or the disaster scale.

10. The disaster information providing device (200) of any one of the claims 7-9, wherein the server control module (220) is configured to preferentially filter the code information of electronic devices on a basis of the code information corresponding to a damage zone adjacent to the disaster occurrence place among a plurality of damage zones to calculate identification information of the electronic devices to which the disaster-related information is able to be transmitted.

11. The disaster information providing device (200) of any one of the claims 7-10, wherein the server control module (220) is configured to preferentially transmit the disaster-related information to the damage zone adjacent to the disaster occurrence place among a plurality of damage zones.

12. The disaster information providing device (200) of any one of the claims 7-11, wherein the server control module (220) is configured to generate the disaster-related information to be transmitted to a plurality of damage zones with different contents and at different times.

13. The disaster information providing device (200) of any one of the claims 7-12, wherein the server control module (220) is configured to determine the number of digits of the code information according to at least one of the disaster occurrence place, the disaster type, or the disaster scale, the number of digits of the code information being associated with a size of a cell area within which an electronic device is positioned, or a size of the damage zone.

14. The disaster information providing device (200) of any one of the claims 7-13, wherein the server control module (220) is configured to differentiate the number of digits of the code information of the electronic device to store the code information for each level, the number of digits of the code information being associated with a size of a cell area within which an electronic device is positioned.

15. The disaster information providing device (200) of any one of the claims 7-14, wherein the server control module (220) is configured to compare a radius of the damage zone defined according to the disaster occurrence, the disaster type, and the disaster type with a distance from a center of the disaster occurrence place to a nearest corner of a cell corresponding to the code information;
wherein a cell of which the distance is shorter than the radius is designated a cell at least partly within the damage zone, and disaster information is transmitted to devices within the designated cell as determined by the code information.
